# EUROPÄISCHE PATENTSCHRIFT

(11) **EP 3 766 134 B1**
(45) Veröffentlichungstag und Bekanntmachung des Hinweises auf die Patenterteilung: **09.02.2022**
(21) Anmeldenummer: 19711567.8
(22) Anmeldetag: 14.03.2019
(51) Int. Cl.: H01R 4/62, H01R 13/03, H01R 4/02, H01R 11/12, H01B 1/02

(54) **VERFAHREN ZUM VERBINDEN ZWEIER LEITER AUS UNTERSCHIEDLICHEN MATERIALIEN, SOWIE VERBINDER UND SYSTEM DAMIT**
METHOD FOR CONNECTING TWO CONDUCTORS COMPOSED OF DIFFERENT MATERIALS, AND CONNECTOR AND SYSTEM THEREFOR
PROCÉDÉ DE CONNEXION DE DEUX CONDUCTEURS FAITS DE DIFFÉRENTS MATÉRIAUX, AINSI QUE CONNECTEUR ET SYSTÈME LE COMPRENANT

(30) Priorität: 28.03.2018 DE 102018107485
(43) Veröffentlichungstag der Anmeldung: 20.01.2021
(73) Patentinhaber: Wobben Properties GmbH, 26607 Aurich (DE)
(72) Erfinder: KÖHLER, Jan-Phillip, 26632 Ihlow (DE); WILLMS, Arne, 26409 Wittmund (DE)
(74) Vertreter: Eisenführ Speiser
(86) Internationale Anmeldenummer: PCT/EP2019/056390
(87) Internationale Veröffentlichungsnummer: WO 2019/185358

(56) Entgegenhaltungen:
- WO-A1-2017/186644
- CN-A- 105 932 433
- GB-A- 1 331 468

## Beschreibung

Die Erfindung betrifft das elektrische Verbinden zweier elektrischer Leiter aus unterschiedlichen Materialien im Allgemeinen und im speziellen die Verbindung von Aluformspulen mit Kupferleitungen zum elektrischen Verbinden der Spule.

Gemäß dem Stand der Technik werden überwiegend elektrische Leiter aus Kupfer verwendet, da diese besonders vorteilhafte elektrische Eigenschaften aufweisen. Zunehmend wird jedoch für die elektrische Leitung auch Aluminium eingesetzt, da dieses günstiger als Kupfer ist und auch ein geringeres Gewicht aufweist.

Zwar ist bekannt, dass ein höherer Leitungsquerschnitt eines Aluminiumleiters im Vergleich zu einem Kupferleiter nötig ist, um einen vergleichbaren spezifischen Widerstand zu erhalten. Trotzdem findet Aluminium als Leiter immer häufiger Einsatz, insbesondere in speziellen Einsatzgebieten, da trotz eines höheren Leiterquerschnitts eines Aluminiumleiters mit einem gleichen spezifischen Widerstand wie ein Kupferleiter, der Aluminiumleiter vergleichsweise leichter ist.

Beispielsweise im Bereich von Windenergieanlagen, bei denen ein Generator in großer Höhe über der Erdoberfläche montiert und dazu mit einem Kran angehoben werden muss, ist beispielsweise der Einsatz von Aluminium für die Generatorwicklungen vorteilhaft. Dieser Vorteil ergibt sich beispielsweise aus den vergleichsweise geringeren Anforderungen an einen Hubkran zum Heben des Generators zur Montage oder auch durch die vergleichsweise geringeren Anforderungen an eine Struktur eines Turmes der Windenergieanlage, der den Generator später im Einsatz trägt.

Aufgrund der Vielzahl von Windungen in einem Windenergieanlagengenerator, um bei diesem Beispiel zu bleiben, werden die Spulen jedoch über Kupferleitungen elektrisch verbunden, da Kupfer beispielsweise nicht so spröde wie Aluminium ist und daher geeigneter ist, Vibrationen zu widerstehen. Außerdem wird das vergleichsweise höhere Gewicht bei Kupferleitungen in Kauf genommen, um auf dem vorhandenen engen Anschlussraum eines Generators die Generatorspulen einfacher elektrisch zu verbinden.

Aufgrund des kombinierten Einsatzes unterschiedlicher Materialien zum Leiten eines Stromes sind daher Verbindungen der Leiter aus unterschiedlichen Materialien nötig, die sehr schwierig und teils aufwändig herzustellen sind. Häufig werden derartige Verbindungen heutzutage beispielsweise rein mechanisch, beispielsweise durch Quetschverbinder, hergestellt.

Verbindungen durch Quetschverbinder sind jedoch teilweise unzuverlässig, da diese in der Regel nicht automatisiert angebracht werden können und daher individuell sogar durch unterschiedliches Personal angebracht werden. Hierdurch entstehen, je nach ausgeübtem Druck oder Anordnung, Schwankungen bei der Qualität der Verbindung. Eine gleichbleibend deterministische elektrische Verbindung ist daher nicht zu gewährleisten. Dieser Effekt wird beispielsweise noch dadurch verstärkt, dass bei mit der Temperatur beispielsweise abnehmendem elektrischen Kontakt ein Strom im vergleichsweise noch kontaktierten Bereich zu einer weiteren Erhöhung der Temperatur führen kann, sodass eine elektrische Verbindung insgesamt überhitzen und dabei zerstört werden kann. Insbesondere bei Aluminium als einer der Verbindungspartner besteht auch die Gefahr einer Oxidation des Aluminiums, sodass mechanische Verbindungen mit Aluminium fehlerhaft sein können.

Alternativ sind auch Schweißverfahren zwischen Aluminium und Kupfer bekannt, die jedoch schwierig zu realisieren und ebenfalls störanfällig sind. Beispielsweise ist aus Dokument GB 1 331 468 bekannt, dass ein elektrischer Verbinder hergestellt wird, indem eine Kupferplatte mit einer Aluminiumplatte laminiert wird. Der Verbinder dient, um so die Kupferplatte einerseits mit einem weiteren Kupferleiter und die Aluminiumplatte mit einem weiteren Aluminiumleiter verbinden zu können. Auch das Dokument CN 105932433 A zeigt einen Verbinder, der ein erstes Ende aus Kupfer und ein zweites Ende aus Aluminium aufweist, die miteinander verbunden sind.

Aufgabe der vorliegenden Erfindung ist es daher, eine Möglichkeit zu finden, zwei Leiter aus unterschiedlichen Materialien einfach und zuverlässig miteinander zu verbinden, sodass der Stromfluss durch die Verbindung insbesondere auch bei Vibrationen oder Temperaturvariationen gewährleistet ist.

Das Deutsche Patent- und Markenamt hat in der Prioritätsanmeldung zu vorliegender Anmeldung den folgenden Stand der Technik recherchiert: CN 105932433 A und US 2013/0240264 A1.

Hierzu betrifft die Erfindung ein Verfahren zum elektrischen Verbinden eines ersten Leiters aus einem ersten Material, beziehungsweise Aluminium, mit einem zweiten Leiter mit oder aus einem zweiten Material, beziehungsweise Kupfer, wobei das zweite Material unterschiedlich vom ersten Material ist. Das elektrische Verbinden kann auch als leitendes Verbinden bezeichnet werden.

Das Verfahren umfasst zunächst das Bereitstellen eines Verbindervorprodukts mit einem Leiterkern aus dem ersten Material, wobei der Leiterkern des Verbindervorprodukts mit einer Mantelschicht aus dem zweiten Material, ummantelt ist. Vorzugsweise wird die Mantelschicht des Verbindervorprodukt durch Plattieren oder Pressen auf den Leiterkern aufgebracht.

Die Mantelschicht ist in einem vorherigen Fertigungsschritt des Verbindervorprodukts derart auf dem Leiterkern angebracht, dass ein Eindringen oder eine Anwesenheit von Sauerstoff in einem Übergangsbereich zwischen dem Leiterkern und der Mantelschicht im Wesentlichen verhindert wird. Beispielsweise könnte auch eine stoffschlüssige Verbindung zwischen dem Leiterkern und der Mantelschicht vorgesehen sein. Durch die Verbindung zwischen dem Leiterkern und dem Leitermantel ohne Sauerstoff im Verbindungsbereich, kann verhindert werden, dass der Leiterkern oxidiert. Besteht demnach der Leiterkern aus Aluminium und die Mantelschicht aus Kupfer, so kann gewährleistet werden, dass eine elektrische Verbindung zwischen dem Leiterkern und der Mantelschicht nicht durch die Bildung einer Oxidschicht unterbrochen wird.

Das Verbindervorprodukt weist ein erstes Ende auf. Zum Bereitstellen oder Erzeugen des Verbinders wird im Bereich des ersten Endes des Verbindervorprodukts die Mantelschicht zumindest teilweise entfernt, um eine Kontaktfläche zum Verbinden, insbesondere elektrischen Verbinden, mit einem ersten Leiter an dem ersten Material bereitzustellen. Zum Bereitstellen der Kontaktfläche wird demnach das Material der Mantelschicht so weit entfernt, bis das erste Material die Kontaktfläche bereitstellt.

Außerdem umfasst das Verfahren das Verbinden des ersten Leiters aus dem ersten Material mit der Kontaktfläche, sodass eine elektrische Verbindung entsteht, und das Verbinden des zweiten Leiters mit einem dem ersten Ende gegenüberliegenden zweiten Endes des Verbinders. Der zweite Leiter wird demnach insbesondere derart mit dem zweiten Ende verbunden, dass der zweite Leiter elektrisch mit der Mantelschicht kontaktiert oder verbunden ist.

Mit dem Verfahren zum Verbinden unter Verwendung des Verbinders, wird es in einfacher Weise möglich, zwei Leiter miteinander elektrisch, also elektrisch leitend, zu verbinden, auch wenn diese aus unterschiedlichen Materialien bestehen, oder diese umfassen. Dies wird möglich, durch die besondere Ausgestaltung des Verbinders, durch Bereitstellen des Verbindervorprodukts sowie dessen Bearbeitung zur Erzeugung des Verbinders.

Insbesondere erweist sich als vorteilhaft, dass die Verbindungen der unterschiedlichen Materialien bereits durch das Verbindervorprodukt selbst bereitgestellt sind und daher durch Vorprozessierung, also die vorherige Herstellung, unabhängig von Temperaturgrenzen oder räumlichen Beschränkungen, separat hergestellt werden können, ohne dass Oxidschichten eine elektrische Verbindung zwischen den beiden Materialien beeinflussen.

Gemäß einer Ausführungsform erfolgt das Verbinden des Leiters aus dem ersten Material mit der Kontaktfläche durch ein Fügeverfahren. Geeignete Fügeverfahren sind beispielsweise das Schweißen, vorzugsweise das WIG-Schweißen, oder das Löten, insbesondere Hartlöten unter Verwendung eines Formteils. Alternativ oder zusätzlich erfolgt das Verbinden des ersten Leiters aus dem ersten Material durch ein Pressverfahren, insbesondere ein Pressverbinden oder Pressschweißen.

Besonders einfach kann demnach die Kontaktfläche, die eine Fläche aus dem ersten Material bereitstellt mit dem ersten Leiter, der aus demselben Material besteht, verbunden werden. Weiterer Vorteil ist, dass eine Oxidschicht auf dem ersten Leiter und/oder dem Leiterkern im Bereich der Kontaktfläche durch derartige Verbindungsverfahren aufgebrochen wird und somit einer fehlerfreien elektrischen Verbindung nicht entgegenstehen kann.

Gemäß einer weiteren Ausführungsform wird zum Verbinden des ersten Leiters ein Durchbruch durch den Verbinder im Bereich der Kontaktfläche, also im Bereich des ersten Endes, bereitgestellt. Der Durchbruch weist vorzugsweise eine Öffnungsgeometrie oder Querschnittsform auf, die der Querschnittsgeometrie oder Querschnittsform eines zu verbindenden ersten Leiters entspricht, oder zumindest im Wesentlichen entspricht. Zum Verbinden des ersten Leiters wird der erste Leiter durch den Durchbruch am ersten Ende eingeführt.

Nach dem Einführen wird der erste Leiter, vorzugsweise durch ein Fügeverfahren, oder ein Pressverfahren, mit dem Verbinder verbunden.

Ein besonders sicherer Halt des Verbinders am ersten Leiter wird somit gewährleistet.

Gemäß einer weiteren Ausführungsform wird zum Verbinden des zweiten Leiters mit dem Verbinder ein Durchbruch durch den Verbinder im Bereich des zweiten Endes des Verbinders, das dem ersten Ende gegenüberliegt, erzeugt. Der Durchbruch wird vorzugsweise durch Bohren in den Verbinder eingebracht. Der zweite Leiter wird dann durch eine Schraubverbindung mit dem Verbinder verbunden. Vorzugsweise weist der zweite Leiter hierzu ebenfalls einen Durchbruch oder eine Bohrung auf. Der Durchbruch im zweiten Leiter wird beispielsweise durch einen Kabelschuh, der vorzugsweise auf der gegenüberliegenden Seite zum Durchbruch einen Pressverbinder zur Verbindung mit einem Kabel oder einer Litze aufweist, des zweiten Leiters oder den zweiten Leiter unmittelbar bereitgestellt. Eine Kontaktierung zwischen dem zweiten Leiter, der z.B. das gleiche Material umfasst, wie die Mantelschicht des Verbinders, wird demnach durch eine einfache Schraubverbindung sicher hergestellt. Beispielsweise umfasst der zweite Leiter Kupfer, dass verzinkt ist.

Der Verbinder umfasst eine Mantelschicht, die ebenfalls aus Kupfer besteht, das auch verzinkt sein kann.

Eine Schraubverbindung zwischen dem zweiten Leiter und dem Verbinder ist weiterhin vorteilhaft, da beispielsweise der Verbinder in einem Vorverarbeitungsschritt mit dem ersten Leiter verbunden werden kann, wobei dies beispielsweise durch Schweißen erfolgt, und dann später bei einer Endmontage auch auf engem Bauraum eine Verbindung zwischen dem zweiten Leiter und dem Verbinder und somit auch dem ersten Leiter hergestellt werden kann.

Gemäß einer weiteren Ausführungsform ist der Durchbruch am zweiten Ende als Bohrung ausgebildet, sodass der zweite Leiter durch die Bohrung am Verbinder mittels einer Schraube und einer Mutter gesichert wird. Alternativ ist der Durchbruch am zweiten Ende des Verbinders durch eine Bohrung mit Einbringen eines Gewindes hergestellt. Ein einfaches Einschrauben einer Schraube zum Verbinden des zweiten Leiters mit der Bohrung am zweiten Ende ist daher möglich.

Somit wird eine lösbare Verbindung zwischen dem zweiten Leiter und dem Verbinder und somit auch dem ersten Leiter ermöglicht. Dadurch kann auch im Falle eines Defekts zum Austausch von Leitern die Verbindung in einfacher Weise ohne Zerstörung wieder gelöst werden.

Gemäß einer weiteren Ausführungsform erfolgt das Entfernen der Mantelschicht des Verbinders durch ein spanendes Verfahren. Eine feste Materialverbindung der beiden Materialien des Verbinders kann somit präzise gelöst werden und die Mantelschicht gemäß einer vorgegebenen Geometrie entfernt werden, um die Kontaktfläche bereitzustellen. Hierbei kann in einfacher Weise berücksichtigt werden, dass möglichst wenig vom Leiterkern aus dem ersten Material entfernt wird.

Außerdem betrifft die Erfindung einen Verbinder zum Verbinden eines ersten Leiters aus einem ersten Material, das beziehungsweise Aluminium ist, mit einem zweiten Leiter mit oder aus einem zweiten Material, das beziehungsweise Kupfer ist.

Der Verbinder umfasst einen Leiterkern aus dem ersten Material, das beziehungsweise Aluminium ist. Außerdem umfasst der Verbinder eine Mantelschicht, die den Leiterkern ummantelt. Die Mantelschicht besteht aus einem vom ersten Material unterschiedlichen Material, das beziehungsweise das zweite Material ist.

Bei dem Verbinder ist die Mantelschicht im Bereich eines ersten Endes des Verbinders entfernt, um eine Kontaktfläche zum Verbinden mit dem ersten Leiter aus dem ersten Material bereitzustellen.

Der Verbinder weist gemäß einer bevorzugten Ausgestaltung die Form eines geraden flachen Stabes auf, wobei gemäß einer alternativen Ausgestaltung der Verbinder, angepasst für einen Einsatz, gebogen oder verformt ist.

Gemäß einer Ausführungsform weist der erste Leiter einen Durchbruch durch den Verbinder im Bereich der Kontaktfläche auf. Der Durchbruch weist vorzugsweise eine Öffnungsgeometrie oder Querschnittsform auf, die der Querschnittsgeometrie oder Querschnittsform des zu verbindenden ersten Leiters entspricht, oder zumindest im Wesentlichen entspricht.

Zum Verbinden des ersten Leiters kann dadurch der erste Leiter durch den Durchbruch am ersten Ende eingeführt werden sodass eine feste Verbindung entsteht.

Gemäß einer Ausführungsform weist der Verbinder an einem dem ersten Ende gegenüberliegenden zweiten Ende einen Durchbruch, insbesondere eine Bohrung, auf, wobei der Durchbruch vorzugsweise ein Gewinde, insbesondere ein Innengewinde, umfasst.

Somit wird eine lösbare Verbindung des zweiten Leiters mit dem Verbinder und damit auch indirekt mit dem ersten Leiter bereitgestellt.

Gemäß einer Ausführungsform ist die Mantelschicht durch Plattieren oder Pressen auf den Leiterkern des Verbinders aufgebracht. Eine feste materialschlüssige Verbindung zwischen der Mantelschicht und dem Leiterkern ist somit hergestellt.

Gemäß einer weiteren Ausführungsform ist die Mantelschicht im Bereich des ersten Endes zum Bereitstellen der Kontaktfläche durch ein spanendes Verfahren entfernt.

Außerdem betrifft die Erfindung ein System, das insbesondere eine Windenergieanlage ist. Das erfindungsgemäße System umfasst einen Verbinder nach einer der vorgenannten Ausführungsformen, sowie einen ersten Leiter, der elektrisch oder leitend mit dem Verbinder verbunden ist. Außerdem umfasst das System einen zweiten Leiter, der ebenfalls elektrisch oder leitend mit dem Verbinder verbunden ist.

Gemäß einer Ausführungsform des Systems ist der erste Leiter ein Aluminiumleiter, der eine Formspule ist. Eine Formspule ist eine vorgeformte Spule. Die Spule weist demnach zwei Enden und mehrere zwischen den Enden durch den ersten Leiter gebildete Windungen auf. Ein Ende der Formspule ist demnach mit dem Verbinder verbunden.

Gemäß einer weiteren Ausführungsform ist der zweite Leiter ein Kupferleiter, nämlich ein Kupferkabel oder insbesondere ein Kupferlitzenkabel, vorzugsweise mit einem auf ein Ende des Kupferkabels oder des Kupferlitzenkabels aufgebrachten Kabelschuh, der bevorzugt ebenfalls aus Kupfer besteht, dass verzinkt ist.

Gemäß einer weiteren Ausführung des Systems umfasst dieses einen Windenergieanlagengenerator, der mehrere Verbinder aufweist. Jeder Verbinder ist jeweils mit einem ersten Leiter, der eine Aluminiumformspule ist, verbunden.

Weitere Ausführungsformen ergeben sich anhand der in den Figuren näher erläuterten Ausführungsbeispiele.

Es zeigen:
- Fig. 1: eine Windenergieanlage,
- Fig. 2: ein Verbindervorprodukt zum Erzeugen eines Verbinders,
- Fig. 3: zwei Leiter, die durch einen Verbinder verbunden sind.
- Fig. 4: eine Verbindung eines ersten Leiters mit dem Verbinder und
- Fig. 5: die Schritte zum Verbinden zweier Leiter.

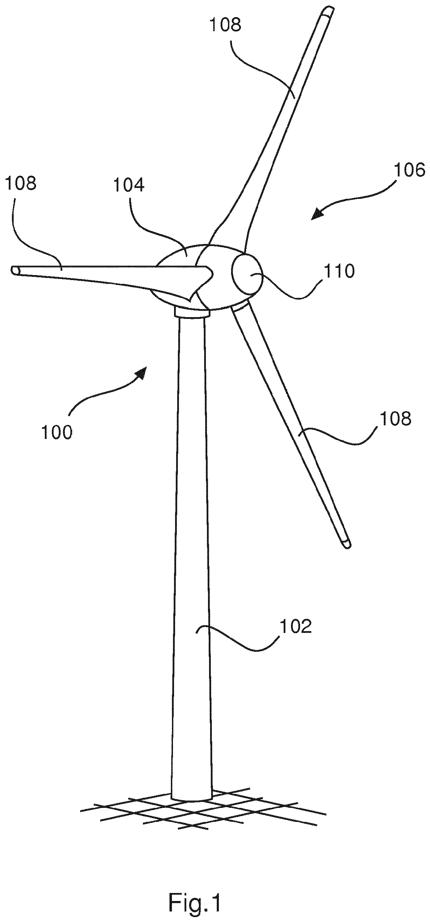

Fig. 1 zeigt eine schematische Darstellung eines Systems, das eine Windenergieanlage 100 gemäß einem Ausführungsbeispiel der Erfindung ist. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen.

Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

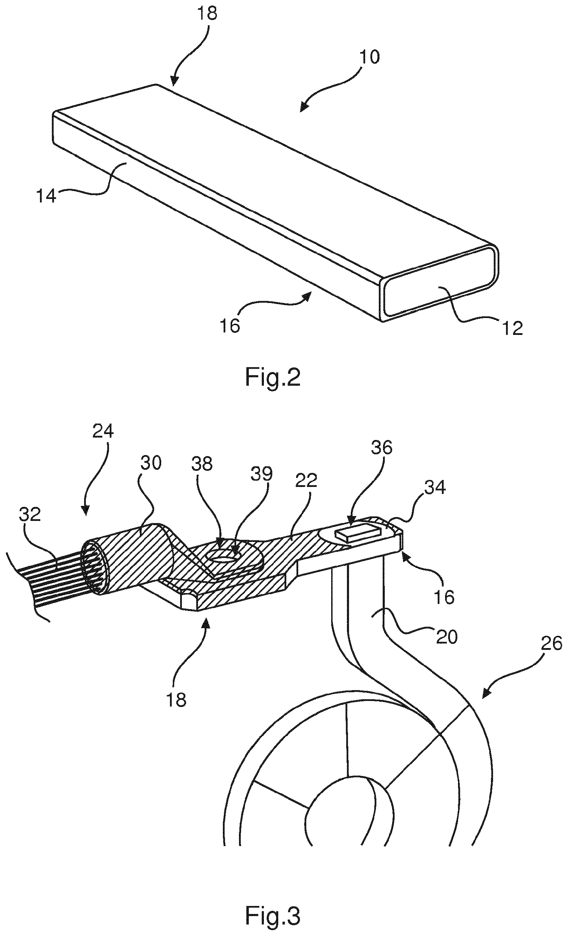

Fig. 2 zeigt eine schematische Darstellung eines Verbindervorprodukts 10, das einen Leiterkern 12 aus einem ersten Material, das Aluminium ist, aufweist. Der Leiterkern 12 ist von einer Mantelschicht 14 umgeben, wobei die Mantelschicht aus Kupfer besteht. Leiterkern 12 und Mantelschicht 14 sind durch ein Pressverfahren fest miteinander verbunden. Das Verbindervorprodukt 10 weist ein erstes Ende 16 und ein gegenüber dem ersten Ende 16 liegendes zweites Ende 18 auf.

Fig. 3 zeigt schematisch einen ersten Leiter 20, der über einen Verbinder 22 mit einem zweiten Leiter 24 verbunden ist. Der Verbinder 22 ist aus dem Verbindervorprodukt 10 durch Entfernen der Mantelschicht 14 am ersten Ende 16 hergestellt worden.

Der erste Leiter 20 ist hier schematisch als eine Formspule 26 dargestellt, die ein Spulenende 28 aufweist. Der Verbinder 22 ist an seinem ersten Ende 16 mit dem Spulenende 28 des ersten Leiters 20 verbunden. Hierzu ist am ersten Ende 16 des Verbinders die Mantelschicht 14 vom Verbindervorprodukt 10 entfernt worden, sodass eine Kontaktfläche 34 mit dem Aluminium bereitgestellt ist. Innerhalb der Kontaktfläche 34 ist ein Durchbruch 36 bereitgestellt, durch den das Spulenende 28 hindurchgeführt ist. Im Bereich der Kontaktfläche 34 ist dann das Spulenende 28 mit dem Verbinder 22 durch ein Fügeverfahren verbunden. Der zweite Leiter 24 umfasst einen Kabelschuh 30, der auf ein Kupferkabel 32 aufgepresst ist. Der Kabelschuh besteht ebenfalls im Wesentlichen aus Kupfer, dass verzinkt ist. Am gegenüber dem ersten Ende 16 liegenden zweiten Ende 18 des Verbinders, weist der Verbinder ebenfalls einen Durchbruch 38 auf. Oberhalb dem Durchbruch 38 ist der Kabelschuh 30 angeordnet, der ebenfalls einen Durchbruch 39 aufweist. Zur Verbindung des Kabelschuhs 30 mit dem Verbinder 22 wird eine Schraube gemeinsam durch beide Durchbrüche 38, 39 hindurchgeführt und verschraubt.

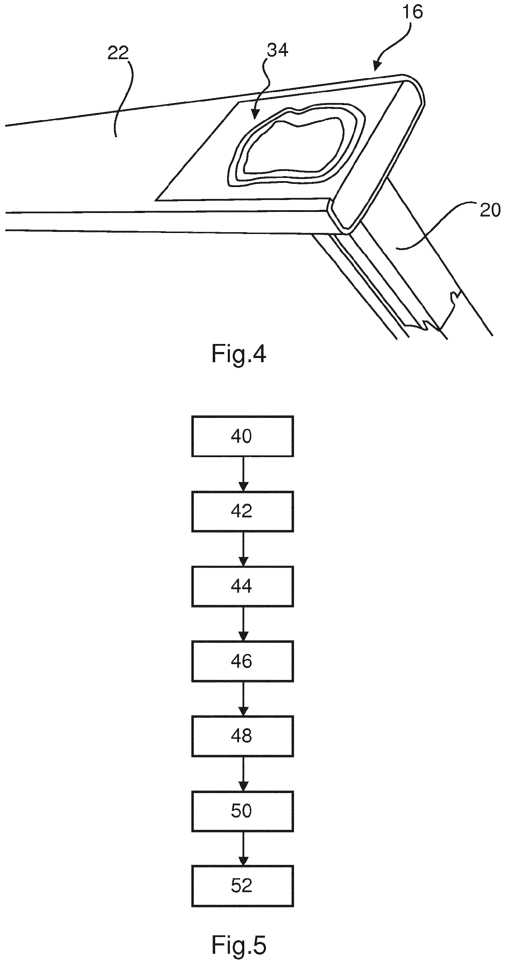

Fig. 4 zeigt eine vergrößerte Darstellung des ersten Endes 16 des Verbinders 22, der durch eine Schweißverbindung mit einem ersten Leiter 20 verbunden ist.

Fig. 5 zeigt die Schritte eines Verfahrens zum Verbinden eines ersten Leiters 20 mit einem zweiten Leiter 24 durch einen Verbinder 22 gemäß einem Ausführungsbeispiel. In einem Schritt 40 wird ein Verbindervorprodukt 10 bereitgestellt, das aus einem Leiterkern 12 und einer den Leiterkern ummantelnden Mantelschicht 14 besteht. Das Verbindungsvorprodukt 10 wird dann in einem Schritt 42 derart bearbeitet, dass an einem ersten Ende 16 des Verbindervorprodukts 10 die Mantelschicht 14 entfernt wird.

In einem Schritt 44 wird dann am ersten Ende im Bereich der entfernten Mantelschicht 14 ein Durchbruch 36 erzeugt und im Schritt 46 wird dann am gegenüber dem ersten Ende 16 liegenden zweiten Ende 18 ein weiterer Durchbruch 38, insbesondere eine Bohrung erzeugt. Im Schritt 48 wird der erste Leiter 20 durch den Durchbruch 36 am ersten Ende 16 in den Verbinder 22 eingeführt und in einem Schritt 50 im Bereich der Kontaktfläche 34 mit dem Verbinder 22 durch Schweißen verbunden. Im Schritt 52 wird dann der zweite Leiter 24 durch eine Schraubverbindung mit dem zweiten Ende 18 des Verbinders 22 verbunden.

## Patentansprüche

1. Verfahren zum elektrischen Verbinden eines ersten Leiters (20) aus einem ersten Material, beziehungsweise Aluminium, mit einem zweiten Leiter (24) mit oder aus einem zweiten vom ersten Material unterschiedlichen Material, beziehungsweise Kupfer, mit einem Verbinder (22) umfassend die Schritte:
- Bereitstellen eines Verbindervorprodukts (10), umfassend einen Leiterkern (12) aus dem ersten Material, der von einer Mantelschicht (14) aus einem vom ersten Material unterschiedlichen Material, beziehungsweise dem zweiten Material, ummantelt ist, wobei das Verbindervorprodukt (10) ein erstes Ende (16) und ein zweites Ende (18) aufweist.
- Entfernen der Mantelschicht (14) im Bereich des ersten Endes (16) zum Bereitstellen einer Kontaktfläche (34),
- Verbinden des ersten Leiters mit dem ersten Ende (16) im Bereich der Kontaktfläche (34) und
- Verbinden des zweiten Leiters (24) mit dem zweiten Ende.

2. Verfahren nach Anspruch 1, wobei das Verbinden des ersten Leiters (20) mit dem ersten Ende (16) durch Fügen mit einem Fügeverfahren, insbesondere Schweißen, vorzugsweise WIG-Schweißen, oder Löten, oder ein Pressverfahren, insbesondere Pressverbinden oder Pressschweißen, erfolgt, um so eine elektrische Verbindung zu erzeugen.

3. Verfahren nach Anspruch 1 oder 2, wobei zum Verbinden des ersten Leiters (20) mit dem Verbinder (22) ein Durchbruch (36), vorzugsweise mit einer Öffnungsgeometrie, die der Querschnittsgeometrie des ersten Leiters (20) zumindest im Wesentlichen entspricht, am ersten Ende (16), im Bereich der Kontaktfläche (34), eingebracht und der erste Leiter (20) in den Durchbruch (36) am ersten Ende (16) zumindest teilweise ein- oder durchgeführt wird.

4. Verfahren nach einem der vorhergehenden Ansprüche, wobei zum Verbinden des zweiten Leiters (24) ein Durchbruch (38), insbesondere durch Bohren, in das zweite Ende (18) des Verbinders (22) eingebracht wird.

5. Verfahren nach Anspruch 4, wobei der Durchbruch (38) eine Bohrung ist und die Verbindung zwischen dem zweiten Leiter (24) und dem Verbinder (22) durch eine Schraubverbindung mittels einer Schraube, die mit einer Mutter gesichert wird, hergestellt wird, oder der Durchbruch (38) eine Bohrung mit einem Gewinde aufweist und der zweite Leiter (24) mit einer Schraube durch eine Schraubverbindung im Gewinde gesichert wird.

6. Verfahren nach einem der vorhergehenden Ansprüche, wobei das Entfernen der Mantelschicht (14) durch ein spanendes Verfahren durchgeführt wird.

7. Verbinder zum Verbinden eines ersten Leiters (20) aus einem ersten Material, beziehungsweise Aluminium, mit einem zweiten Leiter (24) mit oder aus einem zweiten vom ersten Material unterschiedlichen Material, beziehungsweise Kupfer, wobei der Verbinder (22) einen Kern (12) aus dem ersten Material umfasst, der von einer Mantelschicht (14) aus einem vom ersten Material unterschiedlichen Material, beziehungsweise dem zweiten Material, ummantelt ist, wobei die Mantelschicht (14) im Bereich eines ersten Endes (16) des Verbinders (22) entfernt ist, um eine Kontaktfläche (34) zum Verbinden mit dem ersten Leiter (20) bereitzustellen.

8. Verbinder nach Anspruch 7, wobei der Verbinder (22) am ersten Ende (16) im Bereich der Kontaktfläche (34) einen Durchbruch (36) aufweist, der vorzugsweise eine Öffnungsgeometrie aufweist, die einer Querschnittsgeometrie eines zu verbindenden ersten Leiters (20) im Wesentlichen entspricht.

9. Verbinder nach Anspruch 7 oder 8, wobei an einem, dem ersten Ende (16) gegenüberliegenden zweiten Ende (18) ein Durchbruch (38), insbesondere eine Bohrung durch den Verbinder (22) angeordnet ist, wobei der Durchbruch (38) vorzugsweise ein Gewinde, z. B. ein Innengewinde, aufweist.

10. Verbinder nach einem der Ansprüche 7 bis 9, wobei die Mantelschicht (14) durch Plattieren oder Pressen auf den Leiterkern (12) aufgebracht ist, insbesondere sodass im Wesentlichen eine Anwesenheit oder ein Eindringen von Sauerstoff in einem Übergangsbereich zwischen dem Leiterkern (12) und der Mantelschicht (14) verhindert wird.

11. Verbinder nach einem der Ansprüche 7 bis 10, wobei die Mantelschicht (14) durch ein spanendes Verfahren entfernt ist.

12. System, insbesondere Windenergieanlage (100), umfassend einen Verbinder nach einem der Ansprüche 7 bis 11 und einen ersten Leiter (20), der mit einem ersten Ende (16) des Verbinders (22) verbunden ist, sowie einen zweiten Leiter (24), der mit einem zweiten Ende (18) des Verbinders (22) verbunden ist.

13. System nach Anspruch 12, wobei der erste Leiter eine Formspule, insbesondere eine Aluminiumformspule, ist.

14. System nach Anspruch 12 oder 13, wobei der zweite Leiter ein Kupferkabel, insbesondere ein Kupferlitzenkabel (32) und einen Kabelschuh (30) umfasst.

15. System nach einem der Ansprüche 12 bis 14, wobei das System einen Windenergieanlagengenerator umfasst, der mehrere Verbinder (22) umfasst, die jeweils mit einer Formspule des Windenergieanlagengenerators verbunden sind.

## Claims

1. A method of electrically connecting a first conductor (20) composed of a first material, respectively aluminium, to a second conductor (24) comprising or composed of a second material different from the first material, respectively copper, with a connector (22), comprising the steps:
- preparing a connector precursor (10) including a conductor core (12) composed of the first material, that is sheathed by a casing layer (14) composed of a material different from the first material, respectively being the second material, wherein the connector precursor (10) has a first end (16) and a second end (18),
- removing the casing layer (14) in the region of the first end (16) to prepare a contact surface (34),
- connecting the first conductor to the first end (16) in the region of the contact surface (34), and
- connecting the second conductor (24) to the second end.

2. A method according to claim 1 wherein the connection of the first conductor (20) to the first end (16) is effected by joining with a joining method, in particular welding, preferably WIG welding, or soldering or brazing, or a pressing method, in particular pressing connection or pressing welding, in order thus to produce an electrical connection.

3. A method according to claim 1 or claim 2 wherein to connect the first conductor (20) to the connector (22) an aperture (36), preferably involving an opening geometry which at least substantially corresponds to the cross-sectional geometry of the first conductor (20), is provided at the first end (16) in the region of the contact surface (34) and the first conductor (20) is at least partially introduced into or passed through the aperture (36) at the first end (16).

4. A method according to one of the preceding claims wherein for connecting the second conductor (24) an aperture (38) is introduced into the second end (18) of the connector (22), in particular by boring.

5. A method according to claim 4 wherein the aperture (38) is a bore and the connection between the second conductor (24) and the connector (22) is produced by a screw connection by means of a screw which is secured with a nut or the aperture (38) has a bore having a thread and the second conductor (24) is secured with a screw by a screw connection in the thread.

6. A method according to one of the preceding claims wherein removal of the casing layer (14) is performed by a cutting method.

7. A connector for connecting a first conductor (20) composed of a first material, respectively aluminium, to a second conductor (24) comprising or composed of a second material different from the first material, respectively copper, wherein the connector (22) has a core (12) composed of the first material and which is sheathed by a casing layer (14) composed of a material different from the first material, respectively being the second material, wherein the casing layer (14) is removed in the region of a first end (16) of the connector (22) to provide a contact surface (34) for connection to the first conductor (20).

8. A connector according to claim 7 wherein at the first end (16) in the region of the contact surface (34) the connector (22) has an aperture (36) which preferably involves an opening geometry substantially corresponding to a cross-sectional geometry of a first conductor (20) to be connected.

9. A connector according to claim 7 or claim 8 wherein arranged at a second end (18) opposite to the first end (16) is an aperture (38), in particular a bore through the connector (22), wherein the aperture (38) preferably has a thread, for example a female thread.

10. A connector according to one of claims 7 to 9 wherein the casing layer (14) is applied to the conductor core (12) by plating or pressing, in particular so that substantially the presence or penetration of oxygen in a transitional region between the conductor core (12) and the casing layer (14) is prevented.

11. A connector according to one of claims 7 to 10 wherein the casing layer (14) is removed by a cutting method.

12. A system, in particular a wind turbine (100), including a connector according to one of claims 7 to 11 and a first conductor (20) connected to a first end (16) of the connector (22) and a second conductor (24) connected to a second end (18) of the connector (22).

13. A system according to claim 12 wherein the first conductor is a form-wound coil, in particular an aluminium form-wound coil.

14. A system according to claim 12 or claim 13 wherein the second conductor includes a copper cable, in particular a copper braided cable (32) and a cable shoe (30).

15. A system according to one of claims 12 to 14 wherein the system includes a wind turbine generator including a plurality of connectors (22) which are respectively connected to a form-wound coil of the wind turbine generator.

## Revendications

1. Procédé pour raccorder électriquement un premier conducteur (20) composé d'un premier matériau, ou d'aluminium, à un deuxième conducteur (24) avec ou composé d'un deuxième matériau, différent du premier matériau, ou du cuivre, avec un connecteur (22), comprenant les étapes :
- de fourniture d'un produit de départ de connecteur (10), comprenant un noyau conducteur (12) composé du premier matériau, qui est enveloppé d'une couche enveloppante (14) composée d'un matériau différent du premier matériau, ou du deuxième matériau, dans lequel le produit de départ de connecteur (10) présente une première extrémité (16) et une seconde extrémité (18) ;
- de retrait de la couche enveloppante (14) dans la zone de la première extrémité (16) pour fournir une surface de contact (34),
- de raccordement du premier conducteur à la première extrémité (16) dans la zone de la surface de contact (34) ; et
- de raccordement du deuxième conducteur (24) à la seconde extrémité.

2. Procédé selon la revendication 1, dans lequel le raccordement du premier connecteur (20) à la première extrémité (16) a lieu par assemblage avec un procédé d'assemblage, en particulier par soudage, de préférence par soudage TIG, ou par brasage, ou un procédé de pressage, en particulier par assemblage par pressage ou par soudage par pressage pour générer ainsi un raccordement électrique.

3. Procédé selon la revendication 1 ou 2, dans lequel pour raccorder le premier conducteur (20) au connecteur (22), un ajour (36), de préférence avec une géométrie d'ouverture, qui correspond au moins sensiblement à la géométrie de section transversale du premier conducteur (20), est pratiqué sur la première extrémité (16) dans la zone de la surface de contact (34) et le premier conducteur (20) est introduit ou est passé au moins en partie dans l'ajour (36) sur la première extrémité (16).

4. Procédé selon l'une quelconque des revendications précédentes, dans lequel pour raccorder le deuxième conducteur (24), un ajour (38) est pratiqué, en particulier par perçage, dans la seconde extrémité (18) du connecteur (22).

5. Procédé selon la revendication 4, dans lequel l'ajour (38) est un alésage et le raccordement entre le deuxième conducteur (24) et le connecteur (22) est établi par un raccordement par vissage au moyen d'une vis, qui est bloquée avec un écrou, ou l'ajour (38) présente un alésage avec un filetage et le deuxième conducteur (24) est bloqué avec une vis par un raccordement par vissage dans le filetage.

6. Procédé selon l'une quelconque des revendications précédentes, dans lequel le retrait de la couche enveloppante (14) est effectué par un procédé par enlèvement de copeaux.

7. Connecteur pour raccorder un premier conducteur (20) composé d'un premier matériau, ou d'aluminium, à un deuxième conducteur (24) avec ou composé d'un deuxième matériau différent du premier matériau, ou de cuivre, dans lequel le connecteur (22) comprend un noyau (12) composé du premier matériau, qui est enveloppé par une couche enveloppante (14) composée d'un matériau différent du premier matériau, ou du deuxième matériau, dans lequel la couche enveloppante (14) est retirée dans la zone d'une première extrémité (16) du connecteur (22) pour fournir une surface de contact (34) destinée à être raccordée au premier conducteur (20).

8. Connecteur selon la revendication 7, dans lequel le connecteur (22) présente sur la première extrémité (16) dans la zone de la surface de contact (34) un ajour (36), qui présente de préférence une géométrie d'ouverture, qui correspond sensiblement à une géométrie de section transversale d'un premier conducteur (20) à assembler.

9. Connecteur selon la revendication 7 ou 8, dans lequel un ajour (38), en particulier un alésage, est disposé à travers le connecteur (22) sur une seconde extrémité (18) faisant face à la première extrémité (16), dans lequel l'ajour (38) présente de préférence un filetage, par exemple un filetage intérieur.

10. Connecteur selon l'une quelconque des revendications 7 à 9, dans lequel la couche enveloppante (14) est appliquée par placage ou pressage sur le noyau conducteur (12), en particulier si bien que sensiblement une présence ou une infiltration d'oxygène dans une zone de transition entre le noyau conducteur (12) et la couche enveloppante (14) est empêchée.

11. Connecteur selon l'une quelconque des revendications 7 à 10, dans lequel la couche enveloppante (14) est retirée par un procédé par enlèvement de copeaux.

12. Système, en particulier éolienne (100), comprenant un connecteur selon l'une quelconque des revendications 7 à 11 et un premier connecteur (20), qui est raccordé à une première extrémité (16) du connecteur (22), ainsi qu'un deuxième connecteur (24), qui est raccordé à une seconde extrémité (18) du connecteur (22).

13. Système selon la revendication 12, dans lequel le premier conducteur est une bobine de façonnage, en particulier une bobine de façonnage en aluminium.

14. Système selon la revendication 12 ou 13, dans lequel le deuxième conducteur comprend un câble en cuivre, en particulier un câble à torons en cuivre (32) et une cosse de câble (30).

15. Système selon l'une quelconque des revendications 12 à 14, dans lequel le système comprend un générateur d'éolienne, qui comprend plusieurs connecteurs (22), qui sont raccordés respectivement à une bobine de façonnage du générateur d'éolienne.
